# EUROPÄISCHE PATENTSCHRIFT

(11) **EP 4 288 656 B1**
(45) Veröffentlichungstag und Bekanntmachung des Hinweises auf die Patenterteilung: **24.07.2024**
(21) Anmeldenummer: 21839849.3
(22) Anmeldetag: 14.12.2021
(51) Int. Cl.: F03B 1/04, F03B 15/20

(54) **HYDRAULISCHE MASCHINE VOM TYP PELTON**
PELTON-TYPE HYDRAULIC MACHINE
MACHINE HYDRAULIQUE DE TYPE PELTON

(30) Priorität: 03.02.2021 DE 102021102464
(43) Veröffentlichungstag der Anmeldung: 13.12.2023
(73) Patentinhaber: Voith Patent GmbH, 89522 Heidenheim (DE)
(72) Erfinder: SCHABASSER, Martin, 3123 Pfaffing (AT); VONWALD, Stefan, 3074 Michelbach (AT)
(74) Vertreter: Voith Patent GmbH - Patentabteilung
(86) Internationale Anmeldenummer: PCT/EP2021/085642
(87) Internationale Veröffentlichungsnummer: WO 2022/167130

(56) Entgegenhaltungen:
- DE-B- 1 205 019
- GB-A- 140 828
- JP-A- S6 030 477
- JP-A- S60 187 773
- JP-U- S63 112 276

## Beschreibung

Die Erfindung betrifft eine hydraulische Maschine vom Typ Pelton mit einem Laufrad, wenigstens zwei Düsen und einer das Laufrad umgebenden Leitwand zum Ableiten von Spritzwasser, wobei die Düsen durch die Leitwand hindurchgeführt sind, so dass sich ihre Mündungen an der inneren, spritzwasserberührten Fläche der Leitwand befinden.

Eine gattungsgemäße hydraulische Maschine wird in der DE 1 02010 024 475 A1 offenbart. Ähnliche hydraulische Maschinen werden in den Dokumenten JP S60 30477 A und GB 140 828 A offenbart.

Die Aufgabe der Erfindung ist es, eine hydraulische Maschine vom Typ Pelton mit einer Leitwand anzugeben, wobei die Maschine Ablenker umfasst.

Die DE 397389 offenbart den üblichen Aufbau eines solchen Ablenkers, welcher dazu dient den aus den Düsen austretenden Wasserstrahl so abzulenken, dass derselbe nicht mehr oder nur noch teilweise auf die Becher des Laufrades auftrifft. Dadurch kann die hydraulische Maschine schnell herunter geregelt werden, ohne dass ein Druckstoß zu befürchten ist. Außerdem ergibt sich durch das Zusammenwirken von Ablenker und Düsennadel eine doppelte Regulierbarkeit der hydraulischen Maschine.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen.

Im Folgenden wird die Erfindung anhand von Figuren erläutert. Die Figuren zeigen im Einzelnen:
- Fig.1: Hydraulische Maschine vom Typ Pelton
- Fig.2: Wirkprinzipien von Ablenkern
- Fig. 3: Ablenker gemäß dem Stand der Technik
- Fig. 4: Erfindungsgemäßer Ablenker in einer ersten Ausführungsform
- Fig. 5: Erfindungsgemäßer Ablenker in einer zweiten Ausführungsform
- Fig. 6: Erfindungsgemäßer Ablenker in Einbaulage

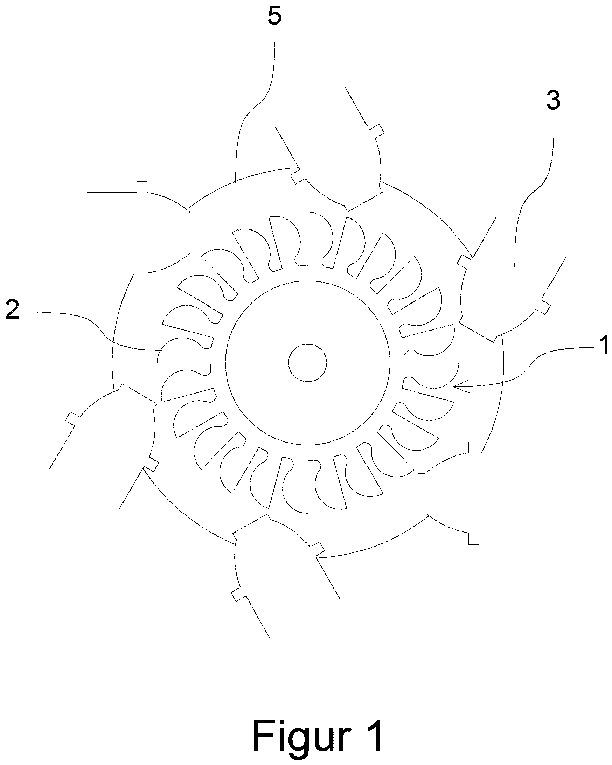

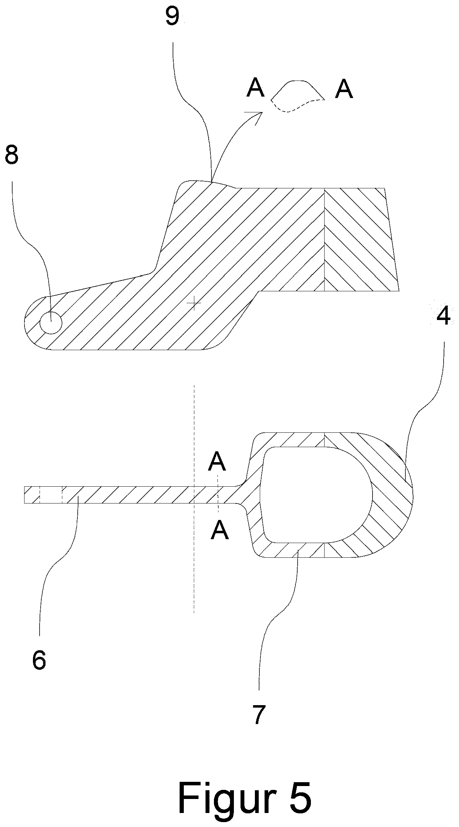

Figur 1 zeigt eine hydraulische Maschine vom Typ Pelton. Die hydraulische Maschine umfasst ein Laufrad, welches mit 1 bezeichnet ist. Das Laufrad 1 umfasst eine Vielzahl von Bechern, von denen einer mit 2 bezeichnet ist. Die hydraulische Maschine umfasst ferner wenigstens zwei Düsen, von denen eine mit 3 bezeichnet ist. Die in Figur 1 dargestellte hydraulische Maschine umfasst sechs Düsen 3. Die hydraulische Maschine umfasst außerdem eine Leitwand, welche mit 5 bezeichnet ist. Die Leitwand 5 dient der Ableitung von Spritzwasser und umschließt das Laufrad 1. Dazu kann die Leitwand 5, wie in Figur 1 dargestellt, ringförmig ausgebildet sein. Genauso gut könnte die Leitwand 5 aus mehreren Segmenten zusammengesetzt sein. Die einzelnen Segmente könnten eine gebogene Kontur oder eine geradlinige Kontur aufweisen. Auch Kombinationen hieraus sind möglich. Die Düsen 3 ragen von außen in den von der Leitwand 5 umschlossenen Raum hinein, so dass der während dem Betrieb der hydraulischen Maschine aus den Düsen 3 austretende Wasserstrahl sich beim Austreten aus den Düsen 3 im Inneren der Leitwand 5 befindet. Dazu weist die Leitwand 5 entsprechende Öffnungen auf. Die Leitwand 5 hat ein dachartiges Profil. Die entsprechende Linie in Figur 5 stellt dabei die Firstlinie der Leitwand 5 dar. Die Flächen der Leitwand 5 weichen sowohl in Blickrichtung als auch in der Gegenrichtung nach radial außen hin zurück. Spritzwasser wird auf diese Weise durch die Leitwand 5 vom Laufrad 1 weg nach außen abgeführt.

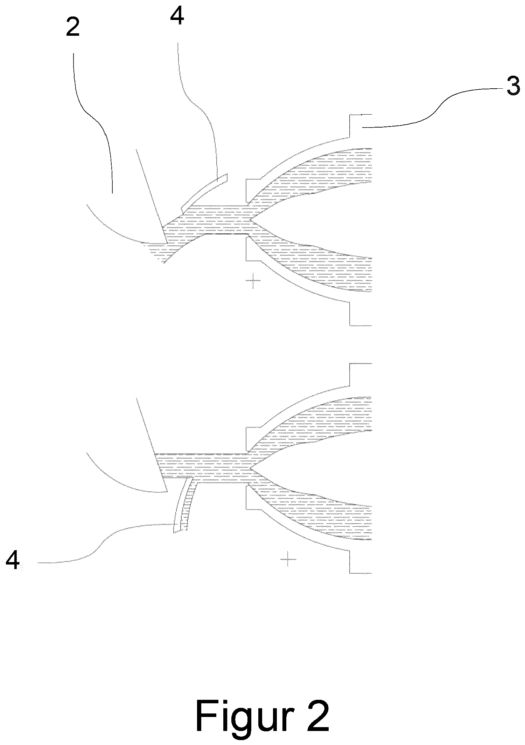

Figur 2 zeigt in stark schematischer Darstellung die beiden möglichen Wirkprinzipien von Ablenkern in hydraulischen Maschinen vom Typ Pelton. Ein solcher Ablenker umfasst einen Ablenkkörper, welcher dazu vorgesehen ist, mit dem Wasserstrahl zu interagieren. In Figur 2 sind die Ablenkkörper mit 4 bezeichnet. Wenn die Ablenker aktiviert werden, führen die Ablenkkörper eine Drehbewegung aus. Die Drehachsen dieser Bewegung sind in Figur 2 durch die kleinen Kreuze angedeutet. Die Drehachsen sind jeweils auf der dem Laufrad abgewandten Seite der Düsen 3 angeordnet. Für jede Düse ist ein solcher Ablenker vorgesehen.

Im oberen Teil der Figur 2 ist das erste Wirkprinzip dargestellt, bei dem sich der Ablenkkörper 4 von der zum Laufrad hin orientieren Seite des Wasserstrahls aus demselben nähert. Beim Eindringen des Ablenkkörpers 4 in den Wasserstrahl wird derselbe nach außen hin abgelenkt, so dass der Wasserstrahl nur noch teilweise auf die Becher 2 auftrifft. Bei vollständiger Aktivierung des Ablenkers ist der Ablenkkörper 4 so angeordnet, dass der Wasserstrahl im ganzem Umfang an den Bechern vorbeigelenkt wird, so dass keine Energie vom Wasserstrahl auf das Laufrad 1 übertragen werden kann. Ein Ablenker, welcher gemäß diesem Wirkprinzip ausgelegt ist, wird auch als Abdrücker bezeichnet, weil er den Wasserstrahl nach außen hin weg drückt.

Im unteren Teil der Figur 2 ist das zweite Wirkprinzip dargestellt, bei dem sich der Ablenkkörper 4 von der dem Laufrad abgewandten Seite des Wasserstrahls aus demselben annähert. Beim Eindringen des Ablenkkörpers 4 in den Wasserstrahl wird ein Teil des Wasserstrahls nach außen hin abgelenkt, so dass der abgelenkte Teil des Wasserstrahls nicht auf die Becher 2 auftrifft. Bei vollständiger Aktivierung des Ablenkers ist der Ablenkkörper 4 so angeordnet, dass der Wasserstrahl im ganzem Umfang an den Bechern vorbeigelenkt wird, so dass keine Energie vom Wasserstrahl auf das Laufrad 1 übertragen werden kann. Ein Ablenker, welcher gemäß diesem Wirkprinzip ausgelegt ist, wird auch als Abschneider bezeichnet, weil er einen Teil des Wasserstrahls abschneidet und nach außen hin ablenkt.

Eine gemäß der vorliegenden Erfindung ausgeführte hydraulische Maschine kann Ablenker gemäß beiden der beschriebenen Wirkprinzipien umfassen.

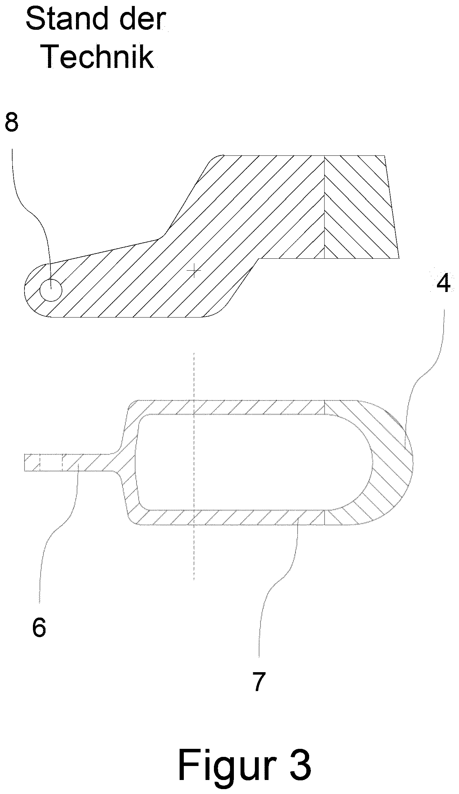

Figur 3 zeigt in schematischer Darstellung einen Ablenker gemäß dem Stand der Technik. Dabei zeigt der obere Teil von Figur 3 den Ablenker in Blickrichtung entlang der Drehachse des Ablenkers, welche wiederum durch ein kleines Kreuz angedeutet ist. Der untere Teil von Figur 3 zeigt den Ablenker in einer Blickrichtung senkrecht zur Drehachse des Ablenkers welche durch die gestrichelte Linie angedeutet ist. Der Ablenker bildet eine Wippe bzw. einen Hebel, welcher um die Drehachse gedreht werden kann. Der Ablenker hat die Form einer zweizinkigen Gabel, d.h. er umfasst ein holmartiges Teilstück, kurz einen Holm, welcher den Stiel der Gabel darstellt und am Verzweigungspunkt der Gabel mit den beiden Schenkeln der Gabel verbunden ist. In Figur 3 ist der Holm mit 6 und einer der Schenkel mit 7 bezeichnet. Der Ablenkkörper 4 erstreckt sich zwischen den beiden dem Holm 6 abgewandten Enden der Schenkel 7. Am den Schenkeln 7 abgewandten Ende des Holms 6 ist eine Angriffspunkt angeordnet, welcher mit 8 bezeichnet ist. Der Angriffspunkt 8 ist dazu vorgesehen, dass an demselben ein Servomotor angreifen kann, um den Ablenker zu betätigen. Die Drehachse des Ablenkers ist so angeordnet, dass sie den Ablenker im Bereich der Schenkel 7 durchdringt.

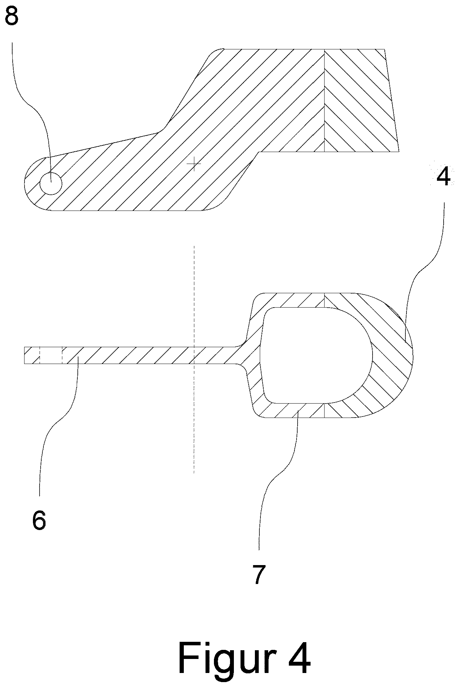

Figur 4 zeigt einen Ablenker gemäß der vorliegenden Erfindung. Im Unterschied zu Figur 3 ist der Holm 6 länger und die Schenkel 7 kürzer ausgeführt, so dass die Drehachse des Ablenkers so angeordnet ist, dass sie den Ablenker im Bereich des Holms 6 durchdringt.

Figur 5 zeigt einen Ablenker gemäß der vorliegenden Erfindung in einer weiteren Ausführungsform. Im Unterschied zu Figur 4 umfasst der Holm 6 ein speziell profiliertes Teilstück, welches mit 9 bezeichnet ist. Der mit dem Pfeil markierte Teil von Figur 5 zeigt einen Schnitt durch den profilierten Holmabschnitt, wobei die Buchstaben A-A die Lage des betreffenden Ausschnitts verdeutlichen. Das Profil ist dachartig ausgebildet.

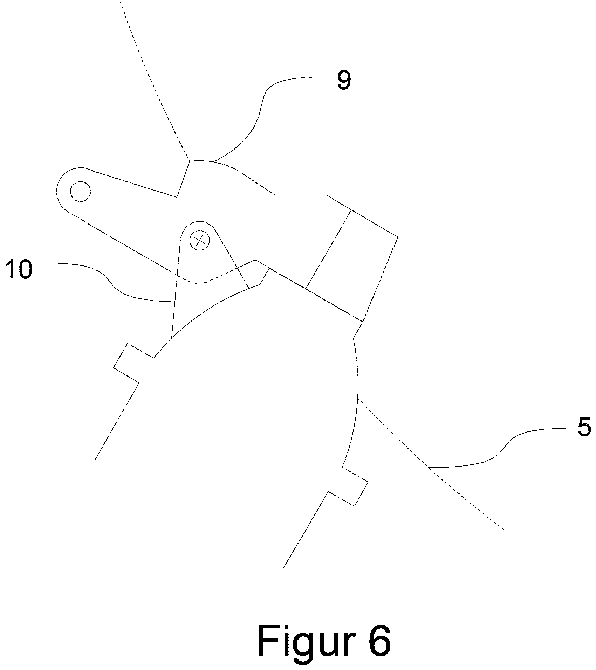

Im Folgenden werden die Vorteile der in den Figuren 4 und 5 dargestellten Ausprägungen der erfindungsgemäßen Ablenker mit Hilfe von Figur 6 erläutert. Figur 6 zeigt einen solchen Ablenker in Einbaulage. Es handelt sich beispielhaft um einen Ablenker vom Typ Abdrücker, welcher in deaktivierter Stellung dargestellt ist, d.h. in dieser Stellung durchdringt der Wasserstrahl den Ablenker zwischen den beiden Schenkeln des gegabelten Teilstücks hindurch, ohne dabei den Ablenkkörper zu berühren. Der Ablenker könnte auch als Abschneider ausgeführt sein. Das Auflager für den Ablenker wird durch eine Doppellasche gebildet, welche mit der dem Laufrad abgewandten Seite der Düse verbunden und in Figur 6 mit 10 bezeichnet ist. Die Drehachse des Ablenkers ist außerhalb der Leitwand 5 angeordnet. Die Leitwand 5 wird durch die gestrichelte Linie angedeutet. Die erfindungsgemäße Ausführung des Ablenkers mit langem Holm und verkürzter Gabel führt dazu, dass sich das gegabelte Teilstück samt Ablenkkörper in jeder vorgesehen Drehstellung des Ablenkers komplett innerhalb der Leitwand 5 befindet. Der Ablenker wird nur mit dem Holm durch die Leitwand 5 geführt, was bewirkt, dass die entsprechenden Öffnungen in der Leitwand 5 klein gehalten werden können. Die Ausführungsform gemäß Figur 5, d.h. mit profiliertem Teilstück 9, hat zudem den Vorteil, dass sich der profilierte Holmabschnitt 9 an die ebenfalls dachartig ausgebildete Leitwand 5 anschließt, so dass diese durch den profilierten Holmabschnitt 9 weiter geführt wird. Die spritzwasserableitende Wirkung der Leitwand 5 wird so durch den Ablenker nur minimal beeinträchtigt. Die in Figur 5 oben und in Figur 6 sichtbare Rundung des Ablenkers im Bereich des profilierten Holmabschnittes 9 bewirkt, dass sich der Ablenker auch, wenn er etwas um die Drehachse gedreht wird, noch immer wie beschrieben mit dem profilierten Holmabschnitt 9 an die Leitwand 5 anschließt, da die Rundung einen Kreisbogen mit einem Mittelpunkt bildet, welcher mit der Drehachse des Ablenkers zusammenfällt.

### Bezugszeichenliste

- 1: Laufrad
- 2: Becher
- 3: Düse
- 4: Ablenkkörper
- 5: Leitwand
- 6: Holm
- 7: Schenkel
- 8: Angriffspunkt
- 9: Profilierter Holmabschnitt
- 10: Lasche

## Patentansprüche

1. Hydraulische Maschine vom Typ Pelton umfassend ein Laufrad (1) mit einer Vielzahl von Bechern (2), wenigstens zwei Düsen (3) und eine Leitwand (5) zur Ableitung von Spritzwasser, welche das Laufrad (1) umschließt, und wobei die Düsen (3) von außen in den von der Leitwand (5) umschlossenen Raum hineinragen, und wobei die hydraulische Maschine für jede Düse (3) einen Ablenker umfasst, welche die im Betrieb aus den Düsen austretenden Wasserstrahlen ablenken können, und wobei jeder Ablenker einen Holm (6), zwei Schenkel (7) und einen Ablenkkörper (4) umfasst, und wobei die zwei Schenkel (7) eine Gabel mit einem Verzweigungspunkt bilden, und der Holm (6) mit dem Verzweigungspunkt der Gabel verbunden ist, und wobei sich der Ablenkkörper (4) zwischen den beiden dem Holm (6) abgewandten Enden der Schenkeln (7) erstreckt, und wobei jeder Ablenker um eine Drehachse drehbar gelagert ausgeführt ist, und wobei die Drehachse den Ablenker im Bereich des Holms (6) durchdringt, und in jeder vorgesehen Drehstellung des Ablenkers die Gabel und der Ablenkkörper (4) komplett innerhalb der Leitwand (5) angeordnet sind, und wobei der Holm (6) die Leitwand (5) durchdringt.

2. Hydraulische Maschine vom Typ Pelton nach Anspruch 1, wobei die Leitwand (5) ein dachartiges Profil aufweist, und der Holm (6) einen dachartig profilierten Abschnitt (9) umfasst, welcher so angeordnet ist, dass der dachartig profilierte Holmabschnitt (9) sich wenigstens in einer Drehstellung des Ablenkers an das dachartige Profil der Leitwand (5) anschließt.

3. Hydraulische Maschine vom Typ Pelton nach Anspruch 2, wobei der profilierte Holmabschnitt (9) eine Kontur in Form eines Kreisbogens aufweist, wobei der Mittelpunkt des Kreisbogens mit der Drehachse des Ablenkers zusammenfällt, so dass der dachartig profilierte Holmabschnitt (9) sich in mehr als einer Drehstellung des Ablenkers an das dachartige Profil der Leitwand (5) anschließt.

## Claims

1. A hydraulic machine of the Pelton type comprising a runner (1) with a plurality of cups (2), at least two nozzles (3) and a guide wall (5) for diverting spray water which encloses the runner (1), and wherein the nozzles (3) project from the outside into the space enclosed by the guide wall (5) and wherein the hydraulic machine comprises a deflector for each nozzle (3), which can deflect the water jets emerging from the nozzles during operation, and wherein each deflector comprises a holm (6), two wings (7) and a deflector body (4) and wherein the two wings (7) form a fork with a branch point, and the holm (6) is connected to the branch point of the fork, and wherein the deflector body (4) extends between the two ends of the wings (7) facing away from the holm (6), and wherein each deflector is designed to be rotatable about an axis of rotation, and wherein the axis of rotation penetrates the deflector in the region of the holm (6), and in each intended rotational position of the deflector the fork and the deflector body (4) are arranged completely within the guide wall (5), and wherein the holm (6) penetrates the guide wall (5).

2. Hydraulic machine of the Pelton type according to claim 1, wherein the guide wall (5) has a roof-like profile, and the holm (6) comprises a roof-like profiled section (9) which is arranged such that the roof-like profiled holm section (9) adjoins the roof-like profile of the guide wall (5) at least in a rotational position of the deflector.

3. Hydraulic machine of the Pelton type according to claim 2, wherein the profiled spar section (9) has a contour in the form of a circular arc, the centre of the circular arc coinciding with the axis of rotation of the deflector, so that the roof-like profiled spar section (9) adjoins the roof-like profile of the guide wall (5) in more than one rotational position of the deflector.

## Revendications

1. Machine hydraulique du type Pelton comprenant un rotor (1) avec une pluralité de gobelets (2), au moins deux buses (3) et une paroi de guidage (5) pour évacuer les projections d'eau, qui entoure le rotor (1), et dans laquelle les buses (3) font saillie de l'extérieur dans l'espace entouré par la paroi de guidage (5), et dans lequel la machine hydraulique comprend, pour chaque buse (3), un déviateur qui peut dévier les jets d'eau sortant des buses en fonctionnement, et dans lequel chaque déviateur comprend un chapeau (6), deux chisses (7) et un corps de déviation (4), et dans lequel les deux branches (7) forment une fourchette avec un point de bifurcation, et le longeron (6) est relié au point de bifurcation de la fourchette, et dans lequel le corps de déflecteur (4) s'étend entre les deux extrémités des branches (7) opposées au longeron (6), et dans lequel chaque déflecteur est réalisé de manière à pouvoir tourner autour d'un axe de rotation, l'axe de rotation traverse le déviateur dans la zone du longeron (6), et dans chaque position de rotation prévue du déviateur, la fourchette et le corps de déviation (4) sont disposés complètement à l'intérieur de la paroi de guidage (5), et le longeron (6) traverse la paroi de guidage (5).

2. Machine hydraulique du type Pelton selon la revendication 1, dans laquelle la paroi de guidage (5) présente un profil en forme de toit, et le longeron (6) comprend une partie (9) profilée en forme de toit, qui est disposée de telle sorte que la partie de longeron (9) profilée en forme de toit se raccorde au profil en forme de toit de la paroi de guidage (5) au moins dans une position de rotation du déviateur.

3. Machine hydraulique du type Pelton selon la revendication 2, dans laquelle la partie de longeron profilée (9) présente un contour en forme d'arc de cercle, le centre de l'arc de cercle coïncidant avec l'axe de rotation du déviateur, de sorte que la partie de longeron profilée en forme de toit (9) se raccorde au profil en forme de toit de la paroi de guidage (5) dans plus d'une position de rotation du déviateur.
